# EUROPÄISCHE PATENTANMELDUNG

(11) **EP 0 525 228 A1**
(43) Veröffentlichungstag der Anmeldung: **03.02.1993**
(21) Anmeldenummer: 91112721.5
(22) Anmeldetag: 29.07.1991
(51) Int. Cl.: B23K 7/10

(54) **Verfahren zum Trennen von Werkstücken insbesondere auch aus Metall mittels chemischer Reaktion und physikalischer Energie eines flüssigen Arbeitsstoffes z. B. Sauerstoff**

(71) Anmelder: HORST K. LOTZ Feuerschutzbaustoffe, D-65719 Hofheim (DE)
(72) Erfinder: Lotz, Horst K., W-6238 Hofheim-Wallau (DE); Lotz, Mattias, W-6200 Wiesbaden-Delkenheim (DE); Lotz, Tobias, W-6200 Wiesbaden-Delkenheim (DE)

(57) **Zusammenfassung**

Durch die Verwendung von flüssigem Sauerstoff aus einem auf einen Brennerwagen angeordneten Behälter zum Schneiden und Kühlen, durch die Erzeugung des Arbeitsdruckes durch Erwärmung desselben und durch Rückführung des gaseförmigen Sauerstoffes mit niedrigerem Druck in andere Verwendungsbereiche wird das schnelle Brennschneiden mit flüssigem Sauerstoff sicher und wirtschaftlich ermöglicht. Die Vermeidung von flexiblen Leitungen für flüssige Medien erhöht die Sicherheit und Rentabilität.

## Beschreibung

Seit vielen Jahren ist bekannt, daß die Arbeitsgeschwindigkeit des Brennschneidens von Stahl mit Sauerstoff durch den verfahrenstechnischen Umstand, die jeweils an der Reaktionsstelle entstehende schmelzflüssige Oxidschlacke wegblasen zu müssen, beschränkt.

Zur Verbesserung wurden deshalb eine Reihe von Maßnahmen vorgenommen, die wiederum nur beschränkte Wirkung hatten oder in der Anwendung umständlich, teuer, gefährlich oder mit anderen erheblichen Nachteilen verbunden waren.

Dazu gehören beispielsweise:
- Zugabe von Schmelzfluß bildenden und die kinetische Strahlenergie erhöhenden Stoffen in Pulverform z. B. Eisenpulver: nur bei höher legierten Stählen konnten die starken Kristallgitterstrukturen der Schlacke aufgelöst und ein Brennschneiden überhaupt ermöglicht werden.
- Verstärkung der Heizung der den Schneidstrahl umgebenden Heizflamme: wenngleich der Schmelzfluß der Schlacke verbessert wurde, so war auch wegen der schlechten Flammenangriffsmöglichkeit und vor allem wegen des Aufschmelzens der Werkstückkanten bei hohem Aufwand das Ergebnis dieser Bemühung allgemein ungenügend, dennoch ging dieses Grundprinzip in jede gute Schneiddüsenkontruktion ein.
- Erhöhung der kinetischen Energie des Schneidstrahles durch Druckerhöhung: obwohl gelegentlich Schneidgeschwindigkeitsverbesserungen durch wesentliche Druckerhöhungen des Schneidsauerstoffes bei guter Umsetzung in Strahlgeschwindigkeit durch entsprechend schwierig herzustellende Düsen (Lavalform) vorzugsweise bei dünneren Materialien erzielt wurden, so war doch die Empfindlichkeit gegen leichte Druckschwankungen, ungenaue Einstellung, Verschleiß und veränderlicher Düsenabstand zum Werkstück mit der Folge des unzeitlichen Aufplatzens des Schneidstrahles zu groß, insbesondere beim Schneiden von dickeren Materialien. Die Versorgung mit gasförmigem Sauerstoff unter hohem Druck war wegen der Kosten individueller Druckerhöhung im Vergleich zum Ergebnis unwirtschaftlich, die meist nicht erforderliche allgemeine Netzdruckerhöhung nicht nur teuer sondern auch wegen der erhöhten Berstgefahr des Rohrsystems unerwünscht.
- Erhöhung der kinetischen Energie des Schneidstrahles durch Verwendung flüssigen Sauerstoffes mit größerer Masse im Schneidstrahl : bei schon vor vielen Jahren durchgeführten, bezogen auf Schneidgeschwindigkeit vorteilhaften Versuchen wurden die Kühlhaltung des Sauerstoffes bis hin zur Schneidstelle als zu teuer und zu schwierig erachtet, die Kosten des flüssigen Sauerstoffes und damit die des Schnittes waren zu hoch, die Abfuhr vergasenden Sauerstoffes in Schneidpausen schien unkontrollierbar, die Anreicherung der Umgebungsluft mit Sauerstoff erschien zu gefährlich und das Arbeiten mit dem Verbrennungsförderer Sauerstoff in flüssiger Form (auch mit Brennstoff z. B. Kohle als Sprengstoff verwendbar) wurde aufgrund kritischer Unfälle als zu gefährlich eingestuft.

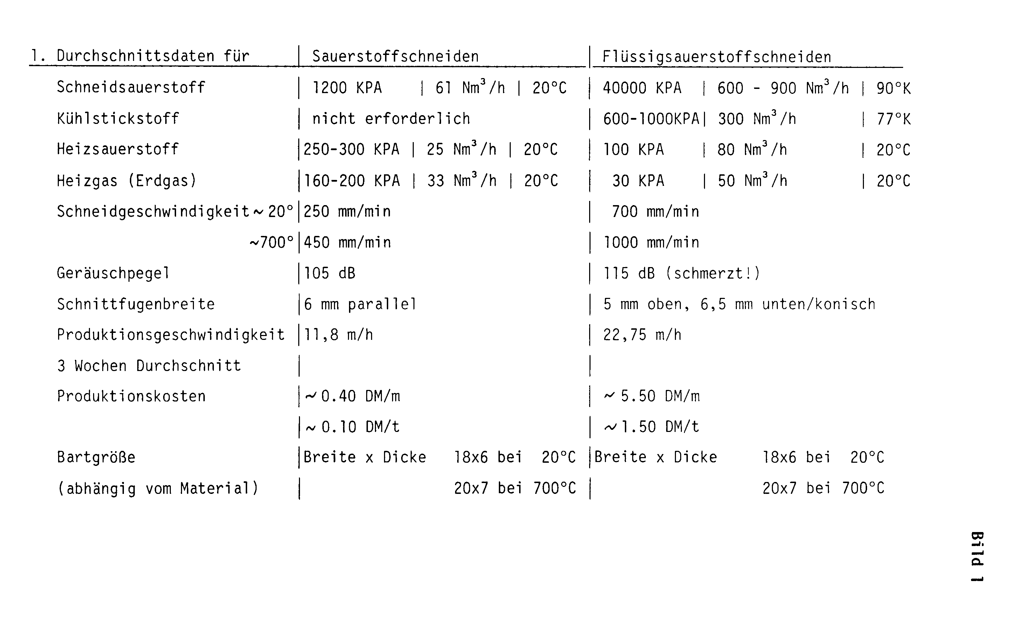

Jüngere Entwickungen unter Einsatz zusätzlicher Druckerhöhungspumpen für Drücke von bis zu über 100.000 KPA (= 1000 bar) und zusätzlichen Kühlkreisläufen mit anderem Kühlmedium z. B. Stickstoff bestätigen die verbesserte Wirkung des Schneidsauerstoffes in flüssigem Zustand. Die Gefahr im Umgang mit größeren Mengen flüssigen Sauerstoffes war bei der direkten Versorgung der Düse aus Hauptbehältern mit langen und zum Teil notwendigerweise beweglichen Versorgungsleitungen nicht gebannt, der zweite Kühlkreislauf mit einem Zweitstoff und der extrem hohe Arbeitsdruck mit seiner Erzeugung und die daraus folgenden Kosten für die Isolationssysteme, die Bauteilbemessung und die Sicherheitsmaßnahmen sind schwierig in die Praxis umsetzbar. Hinzu kommt auch die Empfindlichkeit gegen veränderliche und größere Düsenabstände oder unregelmäßige oder plötzliche Bewegungen der Schneiddüse gegenüber einem gleichmäßigen oder nur stetig veränderten Verfahrensablauf. Nachteilig ist unter anderem auch der Verlust von Sauerstoff durch Verdampfung und Abfluß ins Freie, noch mehr der Austritt eines zweiten verdampfenden Kühlmittels wie flüssiger Stickstoff, was zudem die Gefährlichkeit einer solchen Schneidanlage bei ungünstigen Wetterbedingungen stark erhöht. Besonders ungünstig haben sich dabei auch Druckschwankungen durch ungleichmäßigen Betrieb mit den Druckerhöhungspumpen durch Bruch von Bauteilen und schlechte bis ohne Nacharbeit unbrauchbare Schnittflächen gezeigt. Nimmt man die enormen Betriebsmittelverbräuche von Schneidsauerstoff mit ca. 600 bis 3000 Nm³/h bei ca. 40.000 KPA (= 400 bar) und mehr und Kühlstickstoff mit ca. 300 Nm³/h bei ca. 1000 KPA (= 10 bar) zum Schneiden von kaltem oder heißem Stahl ca. 200 mm dick, dann sind auch die Betriebskosten gegenüber dem konventionellen Brennschneiden mit gasförmigem Sauerstoff zu hoch. Auch ist die Lärmentwicklung bei bekannten Anlagen mit ca. 115 dB etwa doppelt so hoch wie beim herkömmlichen Gasschneiden. Zum besseren Verständnis ist ein aktueller Datenvergleich aus der Praxis für ein Trennwerkzeug einmal mit gasförmigem Sauerstoff und mit flüssigem Sauerstoff beigefügt, Bild 1.

Im Gegensatz zu vorstehend dargestelltem Verfahren zum Schneiden von Stahl mit flüssigem Sauerstoff soll die nachstehend beschriebene Erfindung
- wirtschaftlicher bei Investition, Betriebskosten, Wartung und Ersatzteilhaltung,
- sicherer für Personen und Anlagen,
- zuverlässiger im Betrieb,
- einfacher in der Wartung sein.

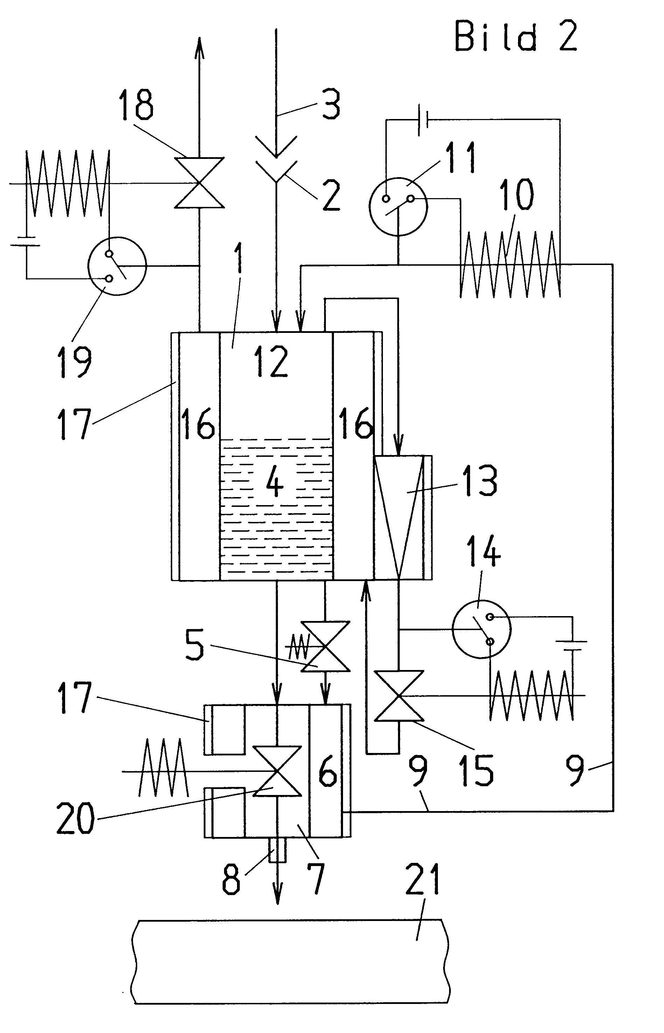

Das als Neuheit beanspruchte Verfahren sieht, wie in Bild 2 schematisch dargestellt, zuerst die Anordnung eines Flüssigsauerstoff enthaltenden und nachfüllbaren, gekühlten Behälters 1 auf einem mit Trenngeschwindigkeit verfahrenden Wagen trotz seiner großen Abmessungen und seines hohen Gewichtes für einen dem Betrieb entsprechenden Inhalt vor. Dieser Behälter 1 wird in einer Ruhestellung des Wagens durch Anfahren bzw. Anheben eines Füllstutzens 2 gegen einen Füllrüssel 3 eines größeren, ortsfesten Behälters, in eine Nachfüllstellung gebracht, wonach mittels Druckdichtungen, Ventilen nach erfolgter Stellungsüberprüfung ein Füllen mit flüssigem Sauerstoff erfolgt.

Nach dem Füllen oder auch Nachfüllen wird ein Teil des flüssigen Sauerstoffes aus der Flüssigzone 4 über ein Absperrventil 5 in den Kühlmantel 6 des Trennwerkzeuges 7 mit Düse 8 oder andere für die Flüssigphase des Sauerstoffes wichtige Bereiche geleitet. Aus diesen fließt dieser Kühlstoff nach Abgabe seiner Kälte in einer angemessenen Wirkreihenfolge flüssig oder gasförmig über eine Rückführung 9 in eine z. B. elektrische Heizung 10 die mittels eines Druckschalters 11 betätigt den Sauerstoff verdampft und auf einen gewünschten Arbeitsdruck bringt. Dieser strömt in die Gaszone 12 des Behälters 1 und bringt den Behälterinhalt auf Arbeitsdruck. Aus der Gaszone kann der Sauerstoff in einen Druckminderer 13 abströmen, der zum einen die Entspannungskälte an den Behälter 1 bzw. andere vorteilhaft zu kühlende Anlagenteile abgibt und zum anderen den kalten, entspannten Sauerstoff über einen Druckschalter 14 und ein Abschaltventil 15 in einen Behälterkühlmantel 16, der in seiner Kühlwirkung neben seiner Druckausgleichwirkung von zusätzlichen Kühlummantelungen 17 mit Isolierstoffen und Vakuumisolation unterstützt wird. Aus dem Behälterkühlmantel 16 strömt der auf einen verwendbaren Druck gebrachte Sauerstoff durch ein Ableitungsventil 18 vielleicht gesteuert durch einen Ableitungsdruckbehälter 19 in eine Leitung bzw. Schlauchleitung, die diesen Sauerstoff in ein Werksnetz zurückführen oder auch zu einer anderen Verwendungsstelle z. B. auf der Maschine zu einem Heizbrenner.

In diesem Verfahren bzw. System gibt es natürlich noch eine Reihe an sich bekannter Abweichungen und Ergänzungen, so z. B. die Anbringung von Überdruck- und Abblasleitungen bzw. -ventilen. Wichtig ist dabei, daß der Abschluß des flüssigen Sauerstoffes mittels eines Absperrventiles 20 möglichst kurz vor der Düse 8 vorgenommen wird d.h. im oder am Trennwerkzeug, um ein Nachfließen bei Betriebsende zu vermeiden oder zu verkürzen und damit die Sicherheit und Betriebskosten günstiger zu gestalten.

Durch die Verwendung nur eines flüssigen Arbeitsstoffes nämlich Flüsigsauerstoff, d.h. kein Kühlstickstoff, und die Rückführung von Sauerstoff zur Wiederverwendung werden Aufwand und Sicherheit wesentlich besser gestaltet. Durch Wegfall flexibler Leitungen steigt ebenfalls die Sicherheit im Arbeitsdruckbereich und der entfallende Aufwand kann leicht für die stabile Konstruktion zum Verfahren des Behälters 1 verwendet werden. Die Verwendung vorhandener Maschinenbauarten mit höhenverstellbarer Laufbahn für den das Trennwerkzeug bewegenden Wagen macht flexible Leitungen auch für eine Höhenverstellung des Trennwerkzeuges 7 überflüssig, und das direkte oder indirekte Aufsetzen dieser Laufbahn auf das Werkstück 20 sorgt für sicheren Düsenabstand.

Die Schaffung des Arbeitsdruckes durch Erwärmen eines Arbeitsstoffanteiles vermeidet den Einsatz nur schwierig zu steuernder Druckerhöhungspumpen mit all ihren betrieblichen (Druckkonstanz) und wartungstechnischen Nachteilen (Berstscheiben).

Es steht fest, daß eine nach vorgeschlagener Art gebaute Schneidanlage mit flüssigem Sauerstoff sicherer, wirtschaftlicher und einfacher zu betreiben ist, auch wenn die konstruktiven Gegebenheiten aufgrund der sinnvoll einsetzbaren Arbeitsdrücke vielleicht nicht die erwartet hohen Schneidgeschwindigkeiten erreichen lassen. Aber bereits eine aufwandentsprechende Erhöhung der vom Gasschneiden bekannten Trenngeschwindigkeiten um 50, 100 oder gar um 150 % ist ein unbestreitbarer Fortschritt gegenüber dem derzeitigen Stand. Eine wesentlich weitergehende Entwicklung der Schneidgeschwindigkeiten ist aber damit nicht ausgeschlossen. Im Gegenteil wird diese durch eine sichere und praxisnahe Anwendung unter heute gut machbaren Voraussetzungen erst ausgelöst.

In Betracht gezogene Schriften:
- Mitteilung BEFA Nr. 4, 22. Jahrgang 1971
- DE - A - 1629 965
- DE - A - 1752 904
- US - A - 2521 199
- US - A - 3498 848
- DE - OS 2948 777
- EP 0 225 487 B1
- DE 3730150 A1
- EP 8910 6458.6
- P 3209818.9
- DE 3103402.2

### Legende

1 LOX Behälter
2 Füllstutzen
3 Füllrüssel
4 Flüssigzone
5 Absperrventil
6 Kühlmantel
7 Trennwerkzeug
8 Düse
9 Rückführung
10 Heizung
11 Druckschalter
12 Gaszone
13 Druckminderer
14 Druckschalter
15 Abschaltventil
16 Behälterkühlmantel
17 Kühlummantelung
18 Ableitungsventil
19 Ableitungsdruckschalter
20 Absperrventil
21 Werkstück

## Patentansprüche

1. Verfahren zum Trennen von Werkstücken insbesondere auch aus Metall mittels chemischer Reaktion und physikalischer Energie eines flüssigen Arbeitsstoffes z. B. Sauerstoff dadurch gekennzeichnet,
- daß in den Arbeitsstoffbehältern ein Arbeitsdruck durch Verdampfen eines Teiles des flüssigen Arbeitsstoffes erzeugt wird,
- daß eine Kühlung des Arbeitsstoffes durch einen mit einem Teil des Arbeitsstoffes als Kühlung versorgten Kühlkreislauf bis zur Düse hin erfolgt,
- und daß der verdampfte Arbeitsstoff entspannt und am Trennwerkzeug verwendet oder über bewegliche Leitungen in ein übliches Versorgungsnetz zurückgeführt wird.

2. Verfahren zum Trennen von Werkstücken insbesondere auch aus Metall mittels chemischer Reaktion und physikalischer Energie eines flüssigen Arbeitsstoffes z. B. Sauerstoff nach Anspruch 1 dadurch gekennzeichnet, daß ein oder mehrere Arbeitsstoffbehälter und die Steuer- und Sicherheitselemente mit dem Düsentrennwerkzeug oder seinem Träger synchron bewegt werden oder gar fest mit diesen verbunden sind.

3. Verfahren zum Trennen von Werkstücken insbesondere auch aus Metall mittels chemischer Reaktion und physikalischer Energie eines flüssigen Arbeitsstoffes z. B. Sauerstoff nach einem der Ansprüche 1 und 2 dadurch gekennzeichnet, daß der zur Erzeugung des Arbeitsdruckes verdampfte oder durch Erwärmung auf Arbeitsdruck gebrachte Teil des Arbeitsstoffes der durch die Kühlarbeit bereits aufgewärmte Teil dieses Arbeitsstoffes ist.

4. Verfahren zum Trennen von Werkstücken insbesondere auch aus Metall mittels chemischer Reaktion und physikalischer Energie eines flüssigen Arbeitsstoffes z. B. Sauerstoff nach einem der Ansprüche 1 bis 3 dadurch gekennzeichnet, daß der Arbeitsstoff nahe vor dem Austritt durch die Düse am oder im Trennwerkzeug bei Betriebsende abgesperrt und damit ein Nachfließen verhindert wird.

5. Verfahren zum Trennen von Werkstücken insbesondere auch aus Metall mittels chemischer Reaktion und physikalischer Energie eines flüssigen Arbeitsstoffes z. B. Sauerstoff nach einem der Ansprüche 1 bis 4 dadurch gekennzeichnet, daß ein Teil des Arbeitsstoffes durch zusätzliche Erwärmung verdampft und auf Arbeitsdruck gebracht in die Behälter über den Arbeitsstoff geleitet wird.

6. Verfahren zum Trennen von Werkstücken insbesondere auch aus Metall mittels chemischer Reaktion und physikalischer Energie eines flüssigen Arbeitsstoffes z. B. Sauerstoff nach einem der Ansprüche 1 bis 5 dadurch gekennzeichnet, daß der verdampfte Arbeits- oder Kühlstoff bei Übersteigen des Arbeitsdruckes abgeleitet und auf einen anderen geeigneten Druck z. B. Netzdruck entspannt und die dabei entstehende Abkühlung für das Kühlen von Arbeitsstoff und Geräten verwendet wird.

7. Verfahren zum Trennen von Werkstücken insbesondere auch aus Metall mittels chemischer Reaktion und physikalischer Energie eines flüssigen Arbeitsstoffes z. B. Sauerstoff nach einem der Ansprüche 1 bis 6 dadurch gekennzeichnet, daß alle einen flüssigen Arbeitsstoff oder Kühlstoff führenden Teile mit festen Isolierstoffen, Vakuum-Isolationsbehältern oder von Kühlstoff durchflossenen Gehäusen umgeben sind.

8. Verfahren zum Trennen von Werkstücken insbesondere auch aus Metall mittels chemischer Reaktion und physikalischer Energie eines flüssigen Arbeitsstoffes z. B. Sauerstoff nach einem der Ansprüche 1 bis 7 dadurch gekennzeichnet, daß die Arbeitsstoffbehälter regelmäßig und bei Bedarf durch Zufluß aus ortsfesten Großbehältern in bestimmter Lage nachgefüllt werden und die Verbindung zwischen Arbeits-und Großbehälter mit Rüssel- und Aufnahmeteil und Druckverschlüssen durch Bewegung an der Trennmaschine besonders durch Anheben hergestellt wird.

9. Verfahren zum Trennen von Werkstücken insbesondere auch aus Metall mittels chemischer Reaktion und physikalischer Energie eines flüssigen Arbeitsstoffes z. B. Sauerstoff nach einem der Ansprüche 1 bis 8 dadurch gekennzeichnet, daß die Kühlung des Arbeitsstoffes, des Kühlstoffes und der Gerätschaften durch ein Kühlaggregat auf der das Düsentrennwerkzeug tragenden Maschine mit gleichem oder eigenem Kühlstoff in besonderem Kreislauf ergänzt oder durchgeführt wird.
